# EUROPÄISCHE PATENTSCHRIFT

(11) **EP 2 039 942 B1**
(45) Veröffentlichungstag und Bekanntmachung des Hinweises auf die Patenterteilung: **07.12.2016**
(21) Anmeldenummer: 08015417.2
(22) Anmeldetag: 01.09.2008
(51) Int. Cl.: F15B 11/04, F16D 25/08, F16K 15/02

(54) **Hydraulisches Ventil**
Hydraulic valve
Soupape hydraulique

(30) Priorität: 24.09.2007 DE 102007045586
(43) Veröffentlichungstag der Anmeldung: 25.03.2009
(73) Patentinhaber: Schaeffler Technologies AG & Co. KG, 91074 Herzogenaurach (DE)
(72) Erfinder: Grabenstätter, Jan, 76593 Gernsbach (DE)

(56) Entgegenhaltungen:
- DE-A1- 2 413 562
- DE-A1- 10 332 370
- DE-A1-102006 053 315
- DE-B1- 1 601 737
- US-A- 4 871 051

## Beschreibung

Die vorliegende Erfindung betrifft ein hydraulisches Ventil gemäß dem Oberbegriff des Patentanspruchs 1.

Insbesondere betrifft die Erfindung ein hydraulisches Ventil zur Anordnung in einer Druckleitung zwischen einem Geberzylinder und einem Nehmerzylinder einer hydraulischen Kupplungsbetätigung, mit einem Gehäuse, das ein Sackloch aufweist, in dem ein Ventilschieber, der eine Durchgangsbohrung aufweist, zwischen einer vorderen und einer hinteren Endstellungen verschiebbar angeordnet ist, wobei eine Wand des Sackloches einen vorderen Durchlass und einen hinteren Durchlass aufweist, die in axialer Richtung gestaffelt angeordnet sind.

Aus der DE 10 2006 053 315 A1 ist eine Drosseleinrichtung zur richtungsabhängigen Beeinflussung der Strömungsgeschwindigkeit eines Fluids in einer hydraulischen Strecke bei der Betätigung einer Fahrzeugkupplung bekannt. Um mit geringem technischen Aufwand sowohl Drehmomentspitzen bzw. extrem schnelle Rückhubbewegungen des Pedals zu vermeiden, und dabei gleichzeitig die Einkuppelgeschwindigkeit zu begrenzen, wird ein herkömmlicher PTL so gestaltet, dass das Leckage-Volumen in der hydraulischen Strecke verkleinert wird, dass der als Schalter fungierende Ventilkörper quer zur Strömungsrichtung eine Durchgangsbohrung aufweist, die abhängig vom Schaltvorgang, mit einer Blende im Durchlass des Zulaufes zur Geberzylindereinheit verbunden werden kann.

Bei einem hydraulischen Ventil nach Stand der Technik kann das Problem auftreten, dass der Ventilkörper die zu überfahrende Bohrung nicht überfährt sondern zuvor stehen bleibt. Dies wird durch ein Verkanten des Ventilkörpers hervorgerufen, wobei die dadurch deutlich erhöhte Reibungskraft größer als die auf den Ventilkörper durch das strömende Fluid einwirkenden hydrodynamischen Kräfte ist, sodass eine weitere Bewegung des Ventilkörpers unterbunden wird.

Aus der DE 24 13 562 A1 ist ein hydraulisches Ventil bekannt, das auf den Oberbegriff des Patentanspruchs 1 lesbar ist.

Eine Aufgabe der vorliegenden Erfindung ist es daher, ein hydraulisches Ventil mit einer gegenüber einem Ventil nach Stand der Technik größerer Funktionssicherheit anzugeben, wobei insbesondere die Gefahr des Verkantens des Ventilschiebers und das damit einhergehende Klemmen des Ventilschiebers verringert werden soll.

Erfindungsgemäß gelöst wird diese Aufgabe durch ein hydraulisches Ventil gemäß Patentanspruch 1. Bevorzugte Ausführungsbeispiele der Erfindung sind in den abhängigen Ansprüchen dargelegt.

Das hydraulische Ventil ist insbesondere zur Anordnung in einer Druckleitung zwischen einem Geberzylinder und einem Nehmerzylinder einer hydraulischen Kupplungsbetätigung vorgesehen und ausgestattet mit einem Gehäuse, das ein Sackloch aufweist, in dem ein Ventilschieber, der eine Durchgangsbohrung aufweist, zwischen einer vorderen und einer hinteren Endstellungen verschiebbar angeordnet ist, wobei eine Wand des Sackloches einen vorderen Durchlass und einen hinteren Durchlass aufweist, die in axialer Richtung gestaffelt angeordnet sind, wobei der hintere Durchlass in der vorderen Endstellung des Ventilschiebers durch den Ventilschieber verdeckt ist und in der hinteren Endstellung des Ventilschiebers unverdeckt ist, wobei der vordere Durchlass in beiden Ventilstellungen unverdeckt ist. Der vordere Durchlass weist einen kleineren Strömungsquerschnitt als der hintere Durchlass auf. Dadurch wird der Unterschied im Strömungswiderstand bzw. Druckabfall für beide Durchströmungsrichtungen vergrößert.

Vorzugsweise weist das Sackloch an seiner Öffnung einen Anschlagring als Endanschlag auf. Der Anschlagring und der Boden des Sackloches bilden Anschläge für den Ventilschieber, zwischen denen dieser frei beweglich gelagert ist.

Das Sackloch wird vorzugsweise durch einen Stopfen, der in eine Durchgangsbohrung eingebracht ist, gebildet. Dies vereinfacht die Herstellung, da so zunächst eine Stufenbohrung von der Bodenseite des Sackloches eingebracht werden kann und der Boden des Sackloches durch den Verschlusstopfen gebildet wird.

Der Ventilschieber weist vorzugsweise eine Nase auf, die in der vorderen Endstellung an den Boden des Sackloches stößt und so einen Anschlag für die vordere Endstellung des Ventilschiebers bildet. Dies ist eine einfach herzustellende Maßnahme um zu gewährleisten, dass der hintere Durchlass auch in der vorderen Stellung des Ventilschiebers unverdeckt bleibt. Der Ventilschieber umfasst vorzugsweise eine Blende, sodass der Druckabfall in dem Ventilschieber vergrößert wird.

Der Bohrungsquerschnitt im Bereich des vorderen Durchlasses ist vorzugsweise größer ist als der Querschnitt des Ventilschiebers. Dadurch können sich Grate, die bei der Herstellung übrig geblieben sind, nicht durch größere Reibung oder größeren Verschleiß des Ventilschiebers auswirken. Der vordere Durchlass ist vorzugsweise kegelförmig, wobei der kleinere Querschnitt dem Sackloch zugewandt ist.

Das eingangs genannte Problem wird auch gelöst durch eine hydraulische Kupplungsbetätigung mit einem Geberzylinder, einem Nehmerzylinder und einer diese verbindende Druckleitung, wobei in der Druckleitung ein erfindungsgemäßes hydraulisches Ventil angeordnet ist.

Im Folgenden werden Ausführungsbeispiele der Erfindung anhand der beiliegenden Zeichnungen erläutert. Dabei zeigen:
- Fig. 1: eine schematische Darstellung eines hydraulischen Systems zur Betätigung einer Fahrzeugkupplung;
- Fig. 2: ein erstes Ausführungsbeispiel eines erfindungsgemäßen hydraulischen Ventils im Teilschnitt in einer ersten Ventilstellung;
- Fig. 3: das Ausführungsbeispiel gemäß Fig. 2 mit eingezeichnetem Strömungsverlauf bei der ersten Ventilstellung;
- Fig. 4: das Ausführungsbeispiel gemäß Fig. 2 mit eingezeichnetem Strömungsverlauf bei einer zweiten Ventilstellung;
- Fig. 5: ein zweites Ausführungsbeispiel eines erfindungsgemäßen hydraulischen Ventils im Teilschnitt in der ersten Ventilstellung.

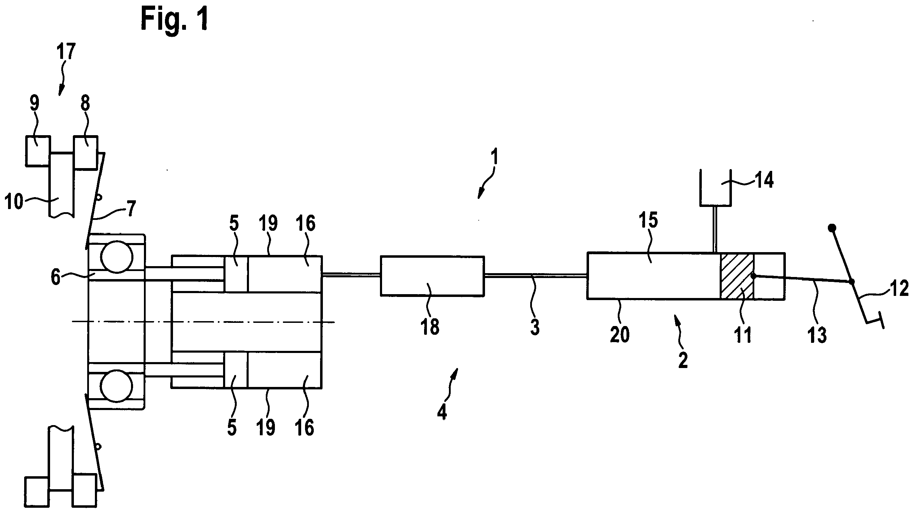

Fig. 1 zeigt als Beispiel für ein hydraulisches Kraftübertragungssystem eine hydraulische Kupplungsbetätigung 1 für ein Kraftfahrzeug. Die hydraulische Kupplungsbetätigung 1 umfasst in an sich bekannter Weise einen Geberzylinder 2, der über eine hydraulische Druckleitung 3 mit einem Nehmerzylinder 4 hydraulisch verbunden ist. Der Nehmerzylinder 4 kann beispielsweise als ringförmiger Nehmerzylinder, als so genannter Zentralausrücker, ausgebildet sein, wobei in einem ringförmigen Nehmerzylindergehäuse 19 ein ringförmiger Nehmerzylinderkolben 5 gelagert ist. Der ringförmige Geberzylinder 4 und der ringförmige Geberzylinderkolben 5 schließen einen wiederum ringförmigen Druckraum 16 ein. Bei einer Betätigung des Nehmerzylinderkolbens 5 wird über ein Ausrücklager 6 in an sich bekannter Weise eine Tellerfeder 7 betätigt. Die Tellerfeder 7 dient der Betätigung einer Fahrzeugkupplung 17. Diese umfasst eine Druckplatte 8, eine Gegendruckplatte 9 und eine Kupplungsscheibe 10. Die Tellerfeder 7 ist so vorgespannt, dass diese in Vorspannrichtung eine Druckplatte 8 auf eine Gegendruckplatt 9 drückt und dabei eine Kupplungsscheibe 10, die drehfest mit einer Getriebeeingangswelle verbunden ist, zwischen Druckplatte 8 und Gegendruckplatte 9 einklemmt. Die Druckplatte 8 und die Gegendruckplatt 9 sind dazu drehfest mit einer Kurbelwelle einer hier nicht dargestellten Brennkraftmaschine verbunden. Bei einer Druckbeaufschlagung des Nehmerzylinders 4 wird somit über den Nehmerzylinderkolben 5 und das Ausrücklager 6 die Tellerfeder 7 so bewegt, dass diese entgegen ihrer Vorspannrichtung den Anpressdruck der Druckplatt 8 in Richtung der Gegendruckplatte 9 verringert und so die reibschlüssige Verbindung zwischen Kupplungsscheibe 10 und Druckplatte 8 bzw. Gegendruckplatte 9 löst. Der Geberzylinder 2 umfasst einen Geberzylinderkolben 11, der mittels eines Kupplungspedals 12 über eine Druckstange 13 betätigt wird. Ein Geberzylindergehäuse 20 des Geberzylinders 2 sowie der darin beweglich angeordnete Geberzylinderkolben 11 schließen einen Druckraum 15 ein. Ein Nachlaufbehälter 14 ist bei drucklosem System, dabei ist der Geberzylinderkolben 11 ist seiner am Weitesten aus dem Geberzylinder 2 herausgezogenen Stellung, hydraulisch mit dem Druckraum 15 verbunden. In der Druckleitung 3 ist ein hydraulisches Ventil 18 angeordnet. Das Ventil 18 soll extrem schnelle Rückhubbewegungen des Kupplungspedal 12 und ein damit einhergehende hohe Einkuppelgeschwindigkeit beim Schließen der Fahrzeugkupplung 17 begrenzen. Dazu umfasst das hydraulische Ventil eine von der Durchflussrichtung abhängige Drossel.

Die hydraulische Kupplungsbetätigung gemäß Fig. 1 ist an sich bekannt. Statt eines Zentralausrückers als Nehmerzylinder 4 können hier auch andere hydraulische Ausrücker verwendet werden, beispielsweise ein Hebelausrücker, der mit einem Nehmerzylinder zusammenwirkt. Ebenso kann statt einer Betätigung des Geberzylinders 2 mit einem Kupplungspedal 12 hier ein elektrischer Aktor oder dergleichen vorgesehen sein. Die Fahrzeugkupplung 17 kann auch statt wie hier durch Kraftbeaufschlagung der Tellerfeder geöffnet zu werden durch Kraftbeaufschlagung geschlossen werden (aktiv zugedrückte Kupplung). Die Ausgestaltung des Geberzylinders sowie die des Nehmerzylinders und ebenso der Fahrzeugkupplung können also beliebig sein, das zuvor dargestellte Ausführungsbeispiel ist hier nur eine von vielen Möglichkeiten, die die Verwendung und den Zweck des nachfolgend dargestellten erfindungsgemäßen hydraulischen Ventils 18 verdeutlichen soll.

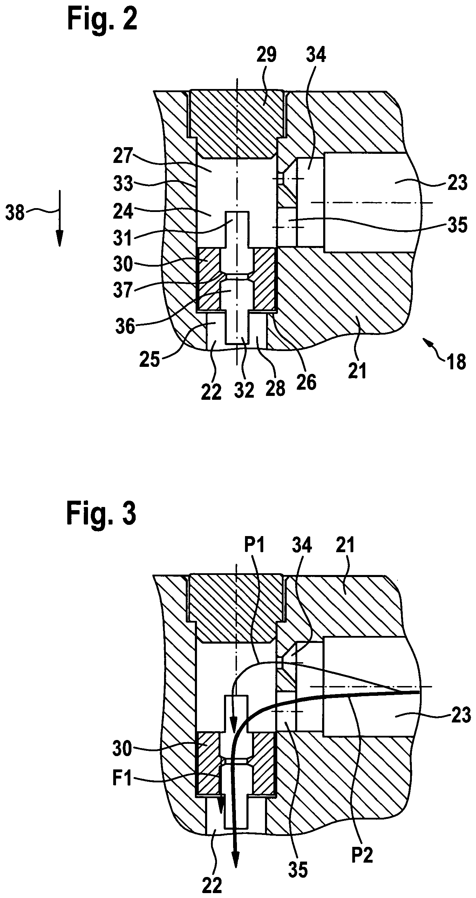

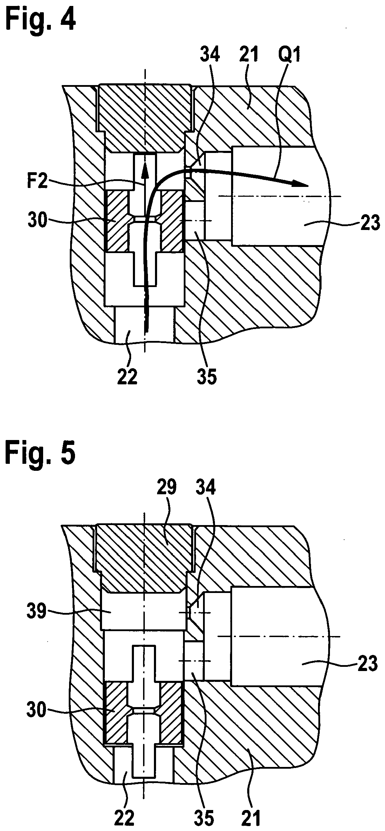

Fig. 2 zeigt einen Teilschnitt durch ein Ausführungsbeispiel eines erfindungsgemäßen hydraulischen Ventils 18. Dieses umfasst ein Gehäuse 21, das einen hier nur schematisch dargestellten nehmerzylinderseitigen Anschluss 22 und einen geberzylinderseitigen Anschluss 23 aufweist. Die Anschlüsse 22 und 23 sind hier nur in Form hydraulischer Zu- bzw. Ableitungskanäle dargestellt. Die Anschlüsse sind ansonsten nicht näher dargestellt und gehen über bzw. umfassen beispielsweise hydraulische Schnellkupplungen oder dergleichen, um das hydraulische Ventil 18 mit entsprechenden Kupplungen bzw. Steckern der Druckleitung 3 verbinden zu können. Das Ventil 18 umfasst ein Sackloch 24. Dieses geht an seinem nehmerzylinderseitigen Ende 25 in den nehmerzylinderseitigen Anschluss 22 über. Das Sackloch 24 ist also zur Nehmerzylinderseite 25 hin offen und wird gebildet durch eine Stufenbohrung, die als Durchgangsbohrung ausgeführt ist, und zur Nehmerzylinderseite 25 hin eine Stufe 26 aufweist, die das Sackloch 24 in eine Bohrung 27 mit großem Durchmesser und eine Bohrung 28 mit einem gegenüber der Bohrung 27 kleineren Durchmesser unterteilt. Auf der der Stufe 26 gegenüberliegenden Seite der Durchgangsbohrung ist ein Stopfen 29 eingebracht, beispielsweise mit Hilfe eines Gewindes eingeschraubt oder eingepresst, verschweißt oder verklebt, wodurch nach Montage des Stopfens 29 das Sackloch 24 gebildet wird. Im Bereich der Bohrung mit großem Durchmesser 27 ist ein Ventilschieber 30 in axialer Richtung frei verschiebbar gelagert. Die Stufe 26 dient als Anschlagring und bewirkt so einen Anschlag für die hintere Endstellung des Ventilschiebers 30. Der Ventilschieber 30 umfasst auf der dem Stopfen 29 zugewandten Seite eine Nase 31. Die Nase 31 bildet zusammen mit dem Stopfen 29 einen Anschlag, die zugehörige Ventilschieberposition ist in Fig. 4 gezeigt, für eine vordere Endstellung des Ventilschiebers 30. In Fig. 2 und 3 ist die hintere Endstellung des Ventilschiebers 30 gezeigt, dabei stößt der Ventilschieber 30 an die Stufe 26 an. Der Ventilschieber 30 kann eine zweite Nase 32 auf der der ersten Nase 31 gegenüberliegenden Seite umfassen, diese dient dazu, den Ventilschieber 30 symmetrisch zu gestalten, sodass dieser in beliebiger Einbauposition eingebaut werden kann, ohne die Funktionsfähigkeit zu beeinträchtigen. Zur Montage des Ventilschiebers 30 wird dieser in die Bohrung 27 von der Seite des Stopfens 29 her eingeführt, danach wird der Stopfen 29 montiert und festgelegt, also zum Beispiel verschraubt, verschweißt oder verklebt, sodass nach Montage des Stopfens 29 das Sackloch 24 gebildet ist. Der Ventilschieber weist eine Durchgangsbohrung 36 mit einer Blende 37 auf.

Das Sackloch 24 weist eine Wand 33 auf, in die ein vorderer Durchlass 34 und ein hinterer Durchlass 35 münden. Der vordere Durchlass 34 und der hintere Durchlass 35 gehen über in den geberzylinderseitigen Anschluss 23. Der vordere Durchlass 34 ist mit einer im Längsschnitt kegelförmigen Bohrung versehen, wobei der kleinere Querschnitt dem Sackloch zugewandt ist. Die minimale Querschnittsfläche des vorderen Durchlasses 34 ist kleiner als die des hinteren Durchlasses 35.

Beim Auskuppeln wird das Ventil 18 von der Geberzylinderseite zur Nehmerzylinderseite durchströmt. Dabei entsteht ein geringer Druckabfall zwischen dem geberzylinderseitigen Anschluss 23 und dem nehmerzylinderseitigen Anschluss 22, sodass eine entsprechende resultierende Kraft F1 auf den Ventilschieber ausgeübt wird. Durch die Kraft F1 wird der Ventilschieber 30 in den durch die Stufe 26 gebildeten Anschlag gedrückt. Diese Stellung ist in Fig. 3 dargestellt. Fluid strömt dabei durch den vorderen Durchlass 34 (Pfeil mit Bezugszeichen P1 in Fig. 3) und den hinteren Durchlass 35 (Pfeil mit Bezugszeichen P2 in Fig. 3). Die gesamte Querschnittsfläche der Durchlässe 34 und 35 ist größer als die Querschnittsfläche der Blende 37, so dass insgesamt nur ein geringer Druckabfall zwischen dem geberzylinderseitigen Anschluss 23 und dem nehmerzylinderseitigen Anschluss 22 entsteht. Beim Einkuppeln wird das Ventil 18 entsprechend umgekehrt geströmt, also vom nehmerzylinderseitigen Anschluss 22 zum geberzylinderseitigen Anschluss 23. Auf die hydraulisch wirksame Stirnfläche des Ventilschiebers 30 wird dabei eine Kraft F2 entgegen der Pfeilrichtung 38 ausgeübt, so dass der Ventilschieber 30 in Richtung des Stopfens 29 gedrückt wird und die in Fig. 4 dargestellte Endlage einnimmt. Der Ventilschieber 30 verschließt dabei den hinteren Durchlass 35, so dass Fluid nur noch durch den vorderen Durchlass 34 strömen kann, dies ist durch den Strömungspfeil Q1 dargestellt. Dadurch entsteht in dieser Durchflussrichtung ein höherer Druckabfall zwischen dem nehmerzylinderseitigen Anschluss 22 und dem geberzylinderseitigen Anschluss 23 als bei Durchströmen in der zuvor dargestellten Gegenrichtung.

Die Blende 37 in dem Ventilschieber 30 sorgt dafür, dass der Druckabfall am Ventilschieber erhöht wird, wodurch sich die Kraft, mit der der Ventilschieber in Richtung des jeweiligen Anschlages geschoben wird, erhöht. Dabei ist der Querschnitt der Blende 37 so groß gehalten, dass die Blende beim Auskuppeln keine störenden Druckabfälle erzeugt. Im Gegensatz zur Ausführungsform nach Stand der Technik wird der Ventilschieber 30 immer komplett durchströmt, d.h. die Kraft, mit der der Ventilschieber gegen den jeweiligen Anschlag geschoben wird, ist zu jedem Zeitpunkt gleich, und zudem wird der vordere Durchlass 34 nicht durch den Ventilschieber überfahren und bleibt immer geöffnet.

Insbesondere bei Spritzgussteilen aus Kunststoff kann ein Grat entstehen, der radial in den vorderen Durchlass 34 hineinragt. Ein derartiger Grat in radiale Richtung kann eine Verkleinerung der Querschnittsfläche, oder, wenn er gerade abreißt, eine nachträgliche Vergrößerung bewirken, wodurch der Druckabfall dem vorderen Durchlass 34 zu groß bzw. zu klein ausfallen kann. Da im Betrieb der Bereich des vorderen Durchlasses 34 nicht überfahren wird, ist bei dem erfindungsgemäßen Ventil 18 ein Grat in axialer Richtung, der den Druckabfall an dem Durchlass nur geringfügig beeinflusst, und der damit nicht so leicht abreißen kann wie ein radial ausgebildeter Grat, durchaus zulässig. Damit bei der Montage des Ventilschiebers 30 ein ausgebildeter Grat nicht störend wirkt oder abgerissen wird, kann im Bereich des vorderen Durchlasses 34 ein vergrößerter Bohrungsquerschnitt 39, wie in Fig. 5 dargestellt, vorgesehen sein.

### Bezugszeichenliste

- 1: Hydraulische Kupplungsbetätigung
- 2: Geberzylinder
- 3: Druckleitung
- 4: Nehmerzylinder
- 5: Nehmerzylinderkolben
- 6: Ausrücklager
- 7: Tellerfeder
- 8: Druckplatte
- 9: Gegendruckplatte
- 10: Kupplungsscheibe
- 11: Geberzylinderkolben
- 12: Kupplungspedal
- 13: Druckstange
- 14: Nachlaufbehälter
- 15: Druckraum
- 16: Druckraum
- 17: Fahrzeugkupplung
- 18: Hydraulisches Ventil
- 19: Nehmerzylindergehäuse
- 20: Geberzylindergehäuse
- 21: Gehäuse
- 22: Nehmerzylinderseitiger Anschluss
- 23: Geberzylinderseitiger Anschluss
- 24: Sackloch
- 25: Nehmerzylinderseite
- 26: Stufe
- 27: Bohrung mit großem Durchmesser
- 28: Bohrung mit kleinem Durchmesser
- 29: Stopfen
- 30: Ventilschieber
- 31: Nase
- 32: Nase
- 33: Wand
- 34: Vorderer Durchlass
- 35: Hinterer Durchlass
- 36: Durchgangsbohrung
- 37: Blende
- 38: Pfeil
- 39: Vergrößerter Bohrungsquerschnitt

## Patentansprüche

1. Hydraulisches Ventil (18), insbesondere zur Anordnung in einer Druckleitung (3) zwischen einem Geberzylinder (2) und einem Nehmerzylinder (4) einer hydraulischen Kupplungsbetätigung (1), mit einem Gehäuse (21), das ein Sackloch (24) aufweist, in dem ein Ventilschieber (30), der eine Durchgangsbohrung (36) aufweist, zwischen einer vorderen und einer hinteren Endstellung verschiebbar angeordnet ist, wobei eine Wand des Sackloches (24) einen vorderen Durchlass (34) und einen hinteren Durchlass (35) aufweist, die in axialer Richtung gestaffelt angeordnet sind, wobei der hintere Durchlass (35) in der vorderen Endstellung des Ventilschiebers (30) durch den Ventilschieber (30) verdeckt ist und in der hinteren Endstellung des Ventilschiebers (30) unverdeckt ist, und der vordere Durchlass (34) in beiden Ventilstellungen unverdeckt ist, **dadurch gekennzeichnet, dass** der vordere Durchlass (34) einen kleineren Strömungsquerschnitt als der hintere Durchlass (35) aufweist.

2. Hydraulisches Ventil (18) nach Anspruch 1, **dadurch gekennzeichnet, dass** das Sackloch (24) an seiner Öffnung einen Anschlagring (26) als Endanschlag aufweist.

3. Hydraulisches Ventil (18) nach Anspruch 1 oder 2, **dadurch gekennzeichnet, dass** das Sackloch (24) durch einen Stopfen (29), der in eine Durchgangsbohrung (36) eingebracht ist, gebildet ist.

4. Hydraulisches Ventil (18) nach einem der Ansprüche 1 bis 3, **dadurch gekennzeichnet, dass** der Ventilschieber (30) eine Nase (31) aufweist, die in der vorderen Endstellung an den Boden des Sackloches (24) stößt und so einen Anschlag für die vordere Endstellung des Ventilschiebers (30) bildet.

5. Hydraulisches Ventil (18) nach einem der Ansprüche 1 bis 4, **dadurch gekennzeichnet, dass** der Ventilschieber (30) eine Blende (37) umfasst.

6. Hydraulisches Ventil (18) nach einem der Ansprüche 1 bis 5, **dadurch gekennzeichnet, dass** ein Bohrungsquerschnitt (39) im Bereich des vorderen Durchlasses (34) größer ist als ein Querschnitt des Ventilschiebers (30).

7. Hydraulisches Ventil (18) nach einem der Ansprüche 1 bis 6, **dadurch gekennzeichnet, dass** der vordere Durchlass (34) kegelförmig ist, wobei ein kleinere Querschnitt des Kegels dem Sackloch (24) zugewandt ist.

8. Hydraulische Kupplungsbetätigung mit einem Geberzylinder (2), einem Nehmerzylinder (4) und einer diese verbindende Druckleitung (3), **dadurch gekennzeichnet, dass** in der Druckleitung (3) ein hydraulisches Ventil (18) nach einem der Ansprüche 1 bis 7 angeordnet ist.

## Claims

1. Hydraulic valve (18), in particular for arranging in a pressure line (3) between a master cylinder (2) and a slave cylinder (4) of a hydraulic clutch actuating means (1), having a housing (21) which has a blind bore (24), in which a valve slide (30) which has a through bore (36) is arranged such that it can be displaced between a front and a rear end position, a wall of the blind bore (24) having a front passage (34) and a rear passage (35) which are arranged in a staggered manner in the axial direction, the rear passage (35) being concealed by the valve slide (30) in the front end position of the valve slide (30) and not being concealed in the rear end position of the valve slide (30), and the front passage (34) not being concealed in both valve positions, **characterized in that** the front passage (34) has a smaller flow cross section than the rear passage (35).

2. Hydraulic valve (18) according to Claim 1, **characterized in that** the blind bore (24) has a stop ring (26) as end stop at its opening.

3. Hydraulic valve (18) according to Claim 1 or 2, **characterized in that** the blind bore (24) is formed by way of a plug (29) which is introduced into a through bore (36).

4. Hydraulic valve (18) according to one of Claims 1 to 3, **characterized in that** the valve slide (30) has a lug (31) which abuts the bottom of the blind bore (24) in the front end position and thus forms a stop for the front end position of the valve slide (30).

5. Hydraulic valve (18) according to one of Claims 1 to 4, **characterized in that** the valve slide (30) comprises an orifice plate (37).

6. Hydraulic valve (18) according to one of Claims 1 to 5, **characterized in that** a bore cross section (39) in the region of the front passage (34) is greater than a cross section of the valve slide (30).

7. Hydraulic valve (18) according to one of Claims 1 to 6, **characterized in that** the front passage (34) is conical, a smaller cross section of the cone facing the blind bore (24).

8. Hydraulic clutch actuating means having a master cylinder (2), a slave cylinder (4) and a pressure line (3) which connects them, **characterized in that** a hydraulic valve (18) according to one of Claims 1 to 7 is arranged in the pressure line (3).

## Revendications

1. Soupape hydraulique (18), en particulier pour l'agencement dans une conduite sous pression (3) entre un maître-cylindre (2) et un cylindre récepteur (4) d'une commande d'embrayage hydraulique (1), comprenant un boîtier (21) qui présente un trou borgne (24) dans lequel est disposé, de manière déplaçable entre une position d'extrémité avant et une position d'extrémité arrière, un coulisseau de soupape (30) qui présente un alésage traversant (36), une paroi du trou borgne (24) présentant un passage avant (34) et un passage arrière (35) qui sont disposés de manière échelonnée dans la direction axiale, le passage arrière (35), dans la position d'extrémité avant du coulisseau de soupape (30), étant recouvert par le coulisseau de soupape (30), et, dans la position d'extrémité arrière du coulisseau de soupape (30), n'étant pas recouvert, et le passage avant (34) n'étant pas recouvert dans les deux positions de soupape, **caractérisée en ce que** le passage avant (34) présente une section transversale d'écoulement inférieure au passage arrière (35).

2. Soupape hydraulique (18) selon la revendication 1, **caractérisée en ce que** le trou borgne (24) présente, au niveau de son ouverture, une bague de butée (26) en tant que butée de fin de course.

3. Soupape hydraulique (18) selon la revendication 1 ou 2, **caractérisée en ce que** le trou borgne (24) est formé par un bouchon (29) qui est introduit dans un alésage traversant (36).

4. Soupape hydraulique (18) selon l'une quelconque des revendications 1 à 3, **caractérisée en ce que** le coulisseau de soupape (30) présente un ergot (31) qui bute dans la position d'extrémité avant contre le fond du trou borgne (24) et qui forme ainsi une butée pour la position d'extrémité avant du coulisseau de soupape (30).

5. Soupape hydraulique (18) selon l'une quelconque des revendications 1 à 4, **caractérisée en ce que** le coulisseau de soupape (30) comprend un diaphragme (37).

6. Soupape hydraulique (18) selon l'une quelconque des revendications 1 à 5, **caractérisée en ce qu'**une section transversale d'alésage (39) dans la région du passage avant (34) est plus grande qu'une section transversale du coulisseau de soupape (30).

7. Soupape hydraulique (18) selon l'une quelconque des revendications 1 à 6, **caractérisée en ce que** le passage avant (34) est de forme conique, une section transversale plus petite du cône étant tournée vers le trou borgne (24).

8. Commande d'embrayage hydraulique comprenant un maître-cylindre (2), un cylindre récepteur (4) et une conduite sous pression (3) reliant ceux-ci, **caractérisée en ce que** dans la conduite sous pression (3) est disposée une soupape hydraulique (18) selon l'une quelconque des revendications 1 à 7.
